# EUROPEAN PATENT SPECIFICATION

(11) **EP 3 171 632 B1**
(45) Date of publication and mention of the grant of the patent: **16.10.2019**
(21) Application number: 16195928.3
(22) Date of filing: 27.10.2016
(51) Int. Cl.: H04W 36/00

(54) **DEVICE AND METHOD OF HANDLING COMMUNICATION FAILURE**
VORRICHTUNG UND VERFAHREN ZUR HANDHABUNG EINES KOMMUNIKATIONSFEHLERS
DISPOSITIF ET PROCÉDÉ DE GESTION DE DÉFAILLANCE DE COMMUNICATION

(30) Priority: 28.10.2015 US 201562247733 P; 24.01.2016 US 201662286430 P
(43) Date of publication of application: 24.05.2017
(73) Proprietor: HTC Corporation, Taoyuan City 330 (TW)
(72) Inventor: Wu, Chih-Hsiang, 330 Taoyuan City (TW)
(74) Representative: Murgitroyd & Company

(56) References cited:
- EP-A1- 2 928 242
- WO-A1-2014/154132
- WO-A1-2015/010301
- "3rd Generation Partnership Project; Technical Specification Group Services and System Aspects; Single Radio Voice Call Continuity (SRVCC); Stage 2 (Release 12)", 3GPP STANDARD; 3GPP TS 23.216, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V12.3.0, 21 June 2015 (2015-06-21), pages 1-69, XP050966252,
- HTC: "Correction to RLF report", 3GPP DRAFT; 36331_CR2015_(REL-13)_R2-161195, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. St. Julian's, Malta; 20160215 - 20160219 14 February 2016 (2016-02-14), XP051054949, Retrieved from the Internet: URL:http://www.3gpp.org/ftp/Meetings_3GPP_ SYNC/RAN2/Docs/ [retrieved on 2016-02-14]

## Description

### Background of the Invention

### 1. Field of the Invention

The present invention relates to a device and a method used in a wireless communication system, and more particularly, to a device and a method of handling a communication failure.

### 2. Description of the Prior Art

A long-term evolution (LTE) system provides high data rate, low latency, packet optimization, and improved system capacity and coverage. The LTE system continues to be evolved to increase peak data rate and throughput by using advanced techniques, such as carrier aggregation (CA), dual connectivity (DC), licensed-assisted access, etc.

A communication call performed by a UE via a service class identifier (QCI) 1 bearer may be dropped due to a handover failure. According to the prior art, a network server is not able to collect information of a communication call drop caused by the handover failure from the UE, because the UE does not include presence of the QCI 1 bearer upon the handover failure in a radio link failure (RLF) report. Thus, the network server is not able to perform correct operations in response to the communication call drop. Thus, how to handle the handover failure is an important problem to be solved.

A network operator may intend to collect a call drop of a call performed via a quality of service class indicator (QCI) 1 bearer over a secondary cell group (SCG) in the UE when the UE is configured to simultaneously connect to a master eNB (MeNB) and a secondary eNB (SeNB), e.g., according to dual connectivity defined in 3GPP specifications. However, it is unknown how the network operator can collect information of the call drop caused by a SCG change failure, because related operations are not defined in the 3GPP specifications. Thus, how to handle the SCG change failure is an important problem to be solved.

EP 2 928 242 A1, WO 2014/154132 A1, WO 2015/010301 A1 and 3GPP TS 23.216, V12.3.0 (2015-06), Single radio voice call continuity (SRVCC) may be regarded as background art useful for understanding the invention.

### Summary of the Invention

it is an object of an embodiment of the present invention to provide a communication device, and method for handling a communication failure, to improve communication between the network and the communication device. This object can be achieved by the features as defined in the independent claims. Further enhancements are characterised by the dependent claims.

A communication device for handling a handover failure comprises a storage unit for storing instructions and a processing circuit coupled to the storage unit. The processing circuit is configured to execute the instructions stored in the storage unit. The instructions comprise transmitting at least one packet of a communication call via a first bearer to a first base station (BS); receiving a handover command from the first BS, wherein the handover command hands over the first bearer to a second BS; performing a handover from the first BS to the second BS; determining that a handover failure of the handover or a radio link failure, RLF, occurs; transmitting a first message to a third BS, wherein the first message comprises first information which indicates the handover failure and presence of the first bearer; and transmitting a second message to a fourth BS, wherein the second message comprises second information which indicates that the RLF occurs and the presence of the first bearer.

A method for handling a handover failure, comprising: transmitting at least one packet of a communication call via a first radio bearer to a first base station, BS; receiving a handover command from the first BS, wherein the handover command hands over the first radio bearer to a second BS; performing a handover from the first BS to the second BS; determining that a handover failure of the handover or a radio link failure, RLF, occurs; and characterising by transmitting a first message to a third BS, wherein the first message comprises a first information which indicates the handover failure and presence of the first radio bearer for performing the communication call; and transmitting a second message to a fourth BS, wherein the second message comprises second information which indicates that the RLF occurs and the presence of the first bearer.

A network server, not part of the invention, for handling a handover failure comprises a storage unit for storing instructions and a processing circuit coupled to the storage unit. The processing circuit is configured to execute the instructions stored in the storage unit. The instructions comprise receiving at least one first information from a first base station (BS), wherein the at least one first information indicates at least one first call drop caused by a handover failure (HOF) or a radio link failure (RLF); receiving at least one second information from a second BS, wherein the at least one second information indicates at least one second call drop caused by the HOF or the RLF; and generating a call drop analysis report which indicates the number of call drops caused by the HOF and/or the number of call drops caused by the RLF according to the at least one first information and the at least one second information.

A communication device, not part of the invention, for handling a communication failure comprises a storage unit for storing instructions and a processing circuit coupled to the storage unit. The processing circuit is configured to execute the instructions stored in the storage unit. The instructions comprise receiving a first configuration configuring a first radio bearer (RB) as a master cell group (MCG) bearer for communicating with a first base station (BS) from the first BS; receiving at least one second configuration configuring at least one second RB as a secondary cell group (SCG) or a split bearer for communicating with a second BS from the first BS; detecting a communication failure when communicating with the first BS; generating a failure report indicating the communication failure; determining whether to allocate information indicating at least one specific type service dropped in the failure report in response to the communication failure; allocating the information in the failure report, if one of the at least one second RB is used for the at least one specific type service; and transmitting a failure information message comprising the failure report to the first BS in response to the communication failure.

These and other objectives of the present invention will no doubt become obvious to those of ordinary skill in the art after reading the following detailed description of the preferred embodiment that is illustrated in the various figures and drawings.

### Brief Description of the Drawings

The accompanying drawings illustrate presently exemplary embodiments of the disclosure and serve to explain, by way of example, the principles of the disclosure.
Fig. 1 is a schematic diagram of a wireless communication system according to an example of the present invention.
Fig. 2 is a schematic diagram of a communication device according to an example of the present invention.
Fig. 3 is a flowchart of a process according to an example of the present invention.
Fig. 4 is a flowchart of a process according to an example of the present invention.
Fig. 5 is a flowchart of a process according to an example of the present invention.
Fig. 6 is a flowchart of a process according to an example of the present invention.
Fig. 7 is a flowchart of a process according to an example of the present invention.

### Detailed Description

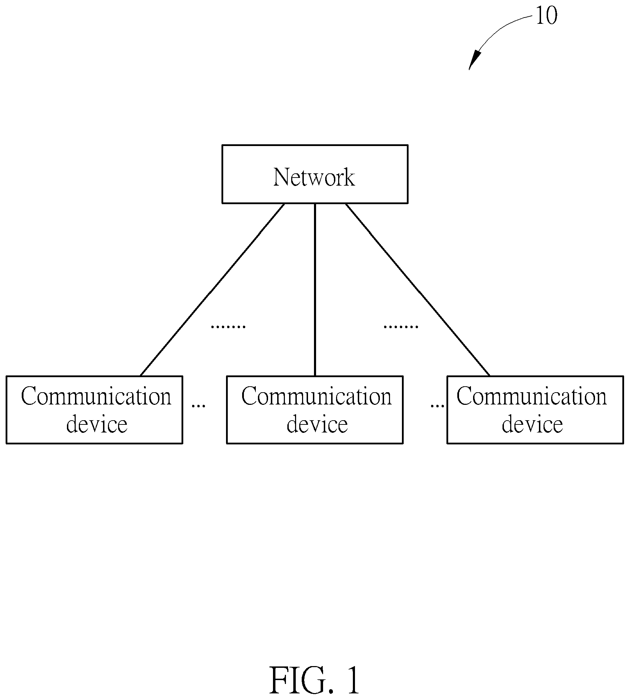

Fig. 1 is a schematic diagram of a wireless communication system 10 according to an example of the present invention. The wireless communication system 10 briefly consists of a network and a plurality of communication devices. The network and a communication device communicate with each other via one or more carriers of licensed band(s) and/or unlicensed band(s). The network and the communication device may simultaneously communicate with each other via multiple cells (e.g., multiple carriers) including a primary cell (PCell) and one or more secondary cells (SCells). The abovementioned cells may be operated in the same or different frame structure types, or in the same or different duplexing modes, i.e. frequency-division duplexing (FDD) and time-division duplexing (TDD). For example, the PCell may be operated on a licensed carrier, while the SCell may be operated on an unlicensed carrier.

In Fig. 1, the network and the communication devices are simply utilized for illustrating the structure of the wireless communication system 10. Practically, the network may be a narrowband (NB) internet of things (loT) network or an evolved universal terrestrial radio access network (E-UTRAN) including at least one evolved Node-B (eNB). The network may be a fifth generation (5G) network including at least one 5G base station (BS) which employs orthogonal frequency-division multiplexing (OFDM) and/or non-OFDM and a transmission time interval (TTI) shorter than 1ms (e.g. 100 or 200 microseconds), to communicate with the communication devices. In general, a BS may also be used to refer any of the eNB and the 5G BS (or called gNB). In addition, the network may further include a network server for processing information received from the communication devices via the at least one eNB or gNB.

A communication device may be a user equipment (UE), an internet of things (loT) device, a mobile phone, a laptop, a tablet computer, an electronic book, a portable computer system, a vehicle, an aircraft. In addition, the network and the communication device can be seen as a transmitter or a receiver according to direction (i.e., transmission direction), e.g., for an uplink (UL), the communication device is the transmitter and the network is the receiver, and for a downlink (DL), the network is the transmitter and the communication device is the receiver.

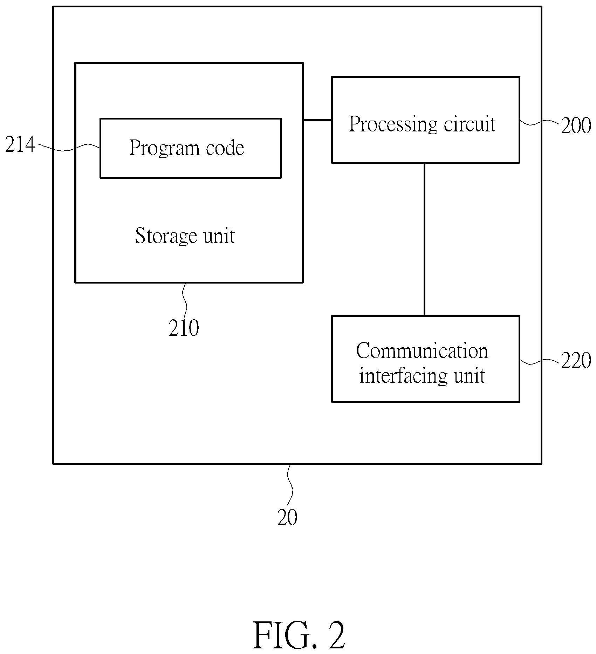

Fig. 2 is a schematic diagram of a communication device 20 according to an example of the present invention. The communication device 20 may be a communication device or the network shown in Fig. 1, but is not limited herein. The communication device 20 may include a processing circuit 200 such as a microprocessor or Application Specific Integrated Circuit (ASIC), a storage unit 210 and a communication interfacing unit 220. The storage unit 210 may be any data storage device that may store a program code 214, accessed and executed by the processing circuit 200. Examples of the storage unit 210 include but are not limited to a subscriber identity module (SIM), read-only memory (ROM), flash memory, random-access memory (RAM), hard disk, optical data storage device, non-volatile storage unit, non-transitory computer-readable medium (e.g., tangible media), etc. The communication interfacing unit 220 is preferably a transceiver and is used to transmit and receive signals (e.g., data, messages and/or packets) according to processing results of the processing circuit 200.

In the following embodiments, a UE is used to represent a communication device in Fig. 1, to simplify the illustration of the embodiments.

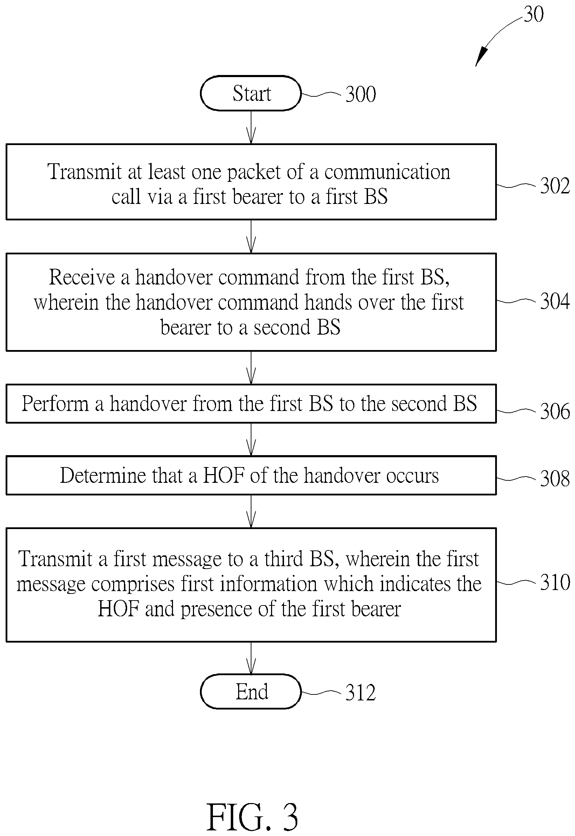

Fig. 3 is a flowchart of a process 30 according to an example of the present invention. The process 30 may be utilized in a UE, for handling a handover failure (HOF). The process 30 may be compiled into the program code 214 and includes the following steps:
Step 300: Start.
Step 302: Transmit at least one packet of a communication call via a first bearer to a first BS.
Step 304: Receive a handover command from the first BS, wherein the handover command hands over the first bearer to a second BS.
Step 306: Perform a handover from the first BS to the second BS.
Step 308: Determine that a HOF of the handover occurs.
Step 310: Transmit a first message to a third BS, wherein the first message comprises first information which indicates the HOF and presence of the first bearer.
Step 308: End.

According to the process 30, the UE transmits at least one packet of a communication call via a first bearer to a first BS. The UE receives a handover command from the first BS, wherein the handover command hands over the first bearer to a second BS. The UE performs a handover from the first BS to the second BS. The communication call may be a voice call or a video call. Then, the UE determines (e.g., detect) that a HOF of the handover occurs. The UE transmits a first message to a third BS, wherein the first message comprises first information which indicates the HOF and presence of the first bearer. That is, the presence of the first bearer for performing the communication call is indicated to the third BS. Thus, the third BS or a network server which receives the first information from the third BS is able to perform correct operations in response to the HOF. The third BS may be the first BS, the second BS or another BS, and is not limited herein.

Realization of the process 30 is not limited to the above description. The following examples may be applied to the process 30.

In one example, the UE transmits the first message to the third BS, when the UE receives a first request message requesting the UE to transmit the first message, from the third BS. In one example, the first information may be a first radio link failure (RLF) report which includes a connection failure type set to "hof" and an indication of the first bearer (e.g., by using a Boolean type field or an enumeration type field). When the network (e.g., the network server) receives the RLF report from the third BS, the network knows that a call drop happens due to a HOF. In one example, the first bearer may be a quality of service class identifier (QCI) 1 bearer or a QCI 2 bearer. In one example, the handover command is an RRCConnectionReconfiguration message.

In one example, the first BS is an eNB, the second BS is a universal mobile telecommunication system (UMTS) BS or a global system for mobile communications (GSM) BS, and the handover command may be a MobilityFromEUTRACommand which indicates the UE to perform a single radio voice call continuity (SRVCC) handover. The first information further indicates that the handover is an inter-radio access technology (RAT) handover. In one example, the first information may be a first RLF report which includes a connection failure type set to "hof", an indication of the first bearer (e.g., by using a Boolean type field or an enumeration type field) and an indication of the inter-RAT handover. Hence, when the network receives the RLF report from the third BS, the network knows that a call drop happens due to a SRVCC HOF. If the indication of the inter-RAT handover is not included in the RLF report, the network knows that a call drop happens due to an intra-RAT (e.g., LTE) HOF. In addition, if the indication of the inter-RAT handover is not defined (e.g., in the 3rd Generation Partnership Project (3GPP) specifications), the UE only reports the intra-RAT HOF and the network can only receive call drop information caused by the intra-RAT handover from the UE.

In one example, When the UE is configured with a QCI 1 bearer for transmitting and/or receiving packet(s) of the communication call and detects the RLF, the UE stores information which indicates the RLF and the presence of the QCI 1 bearer. After the RLF, the UE may connect to a fourth BS to transmit a second message which includes the information to the fourth BS. The fourth BS may be the first BS, the second BS, the third BS or another BS, and is not limited herein.

The first and second messages are the same message or different messages. In one example, the first and second messages are UEInformationResponse messages. The UE transmits a UEInformationResponse message in response to receiving a UEInformationRequest message from the fourth BS.

According to the above description, an example is illustrated as follows. The first bearer is an evolved packet system (EPS) bearer with QCI 1 setting (i.e., QCI 1 bearer) configured by the network. The first BS configures a data radio bearer (RB) corresponding to the EPS bearer to the UE. The UE transmits and/or receives packet(s) of the communication call via the EPS bearer. When the UE does not successfully perform the handover to the second BS within a time interval, the UE determines that the HOF occurs and stores the first information which indicates the HOF and the presence of the QCI 1 bearer. After the HOF, the UE may connect to the third BS, to transmit the first message including the first information to the third BS.

According to the above description, an example is illustrated as follows. The first bearer is an EPS bearer with QCI 1 setting (i.e., QCI 1 bearer) configured by the network. The first BS configures a data RB corresponding to the EPS bearer to the UE. The UE transmits and/or receives packet(s) of the communication call via the EPS bearer. When the UE does not successfully perform the SRVCC handover to the second BS (e.g., GSM BS or UMTS BS) within a time interval, the UE determines that a SRVCC HOF and stores information which indicates the SRVCC HOF. After the SRVCC HOF, the UE may connect to the third BS, to transmit the first message including the information to the third BS.

According to the above description, the first information may further indicate a call type of the communication call. For example, the call type is set to voice when the communication call is a voice call, and the call type is set to video when the communication call is a video call. When the UE has a voice call and a video call, a call type may be set to both. In another example, the call type may be set to voice, if a voice call drop is more important than a video call drop, e.g., from a network operator's perspective. The call type may be set to video, if the video call drop is more important than the voice call drop from the network operator's perspective.

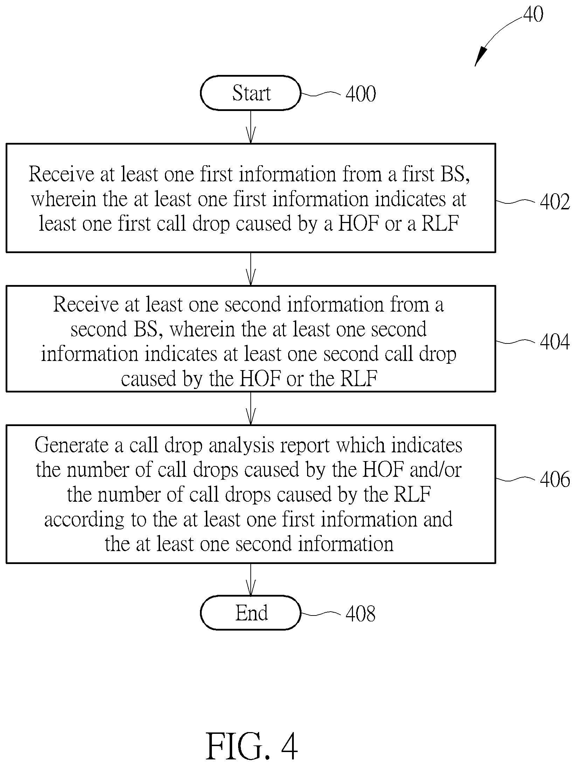

Fig. 4 is a flowchart of a process 40 according to an example of the present invention. The process 40 is utilized in a network server in the network, for handling a HOF. The process 40 may be compiled into the program code 214 and includes the following steps:
Step 400: Start.
Step 402: Receive at least one first information from a first BS, wherein the at least one first information indicates at least one first call drop caused by a HOF or a RLF.
Step 404: Receive at least one second information from a second BS, wherein the at least one second information indicates at least one second call drop caused by the HOF or the RLF.
Step 406: Generate a call drop analysis report which indicates the number of call drops caused by the HOF and/or the number of call drops caused by the RLF according to the at least one first information and the at least one second information.
Step 408: End.

According to the process 40, the network server receives at least one first information from a first BS, wherein the at least one first information indicates at least one first call drop caused by a HOF or a RLF. The network server also receives at least one second information from a second BS, wherein the at least one second information indicates at least one second call drop caused by the HOF or the RLF. Then, the network server generates a call drop analysis report which indicates the number of call drops caused by the HOF and/or the number of call drops caused by the RLF according to the at least one first information and the at least one second information. That is, the network server collects information associated with various types related to operation failures described above, to generate the call drop analysis report.

The first information and the second information may further include location information indicating a location where the HOF or the RLF occurs. An operator of the network server may use the call drop analysis report to improve coverage of the location. The call drop analysis report may further be associated to at least one UE made by a UE vendor. Thus, the operator may deliver the call drop analysis report to a UE vendor. The UE vendor improves the at least one UE according to the call drop analysis report.

The first BS may receive the at least one first information from at least one first UE as described in the process 30. The second BS may receive the at least one second information from at least one second UE as described in the process 30. The at least one first and the at least one second UE may be a same UE or may be different UEs. The examples of the process 30 may be applied to the process 40, and is not narrated herein. For example, the description of the first information in the process 30 may be applied to the first information and the second information in the process 40.

Realization of the process 40 is not limited to the above description. The following examples may be applied to the process 40.

In one example, the number of the call drops caused by the HOF includes at least one of: the number of voice call drops caused by the HOF and the number of video call drops caused by the HOF. The number of the call drops caused by the RLF includes at least one of: the number of voice call drops caused by the RLF and the number of video call drops caused by the RLF.

In one example, the number of call drops caused by the HOF includes at least one of: the number of voice call drops caused by an intra-RAT HOF, the number of voice call drops caused by a SRVCC HOF, the number of video call drops caused by an intra-RAT HOF and the number of video call drops caused by a SRVCC HOF.

In one example, the network server generates the call drop analysis report for a same UE, for UEs of the same model or for UEs of the same brand according to the first information and second information. The network server identifies the same UE, the UEs of the same model or the UEs of the same brand according to international mobile equipment identit(ies) (IMEI(s)) of the UE(s).

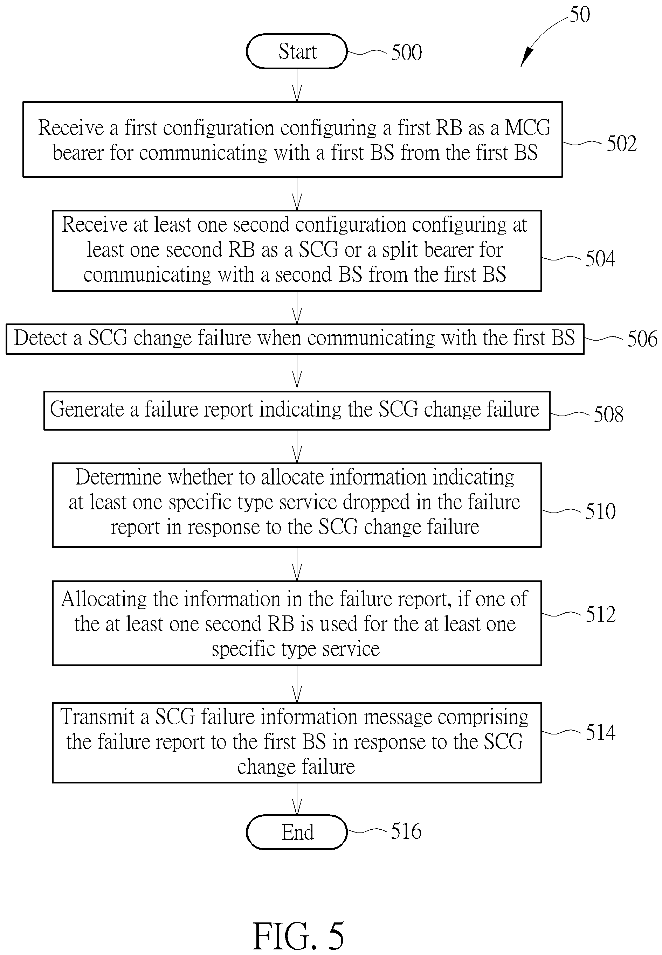

Fig. 5 is a flowchart of a process 50 according to an example of the present invention. The process 50 may be utilized in a UE, for handling a communication failure with multiple BSs. The process 50 may be compiled into the program code 214 and includes the following steps:
Step 500: Start.
Step 502: Receive a first configuration configuring a first RB as a master cell group (MCG) bearer for communicating with a first BS from the first BS.
Step 504: Receive at least one second configuration configuring at least one second RB as a secondary cell group (SCG) or a split bearer for communicating with a second BS from the first BS.
Step 506: Detect a SCG change failure when communicating with the first BS.
Step 508: Generate a failure report indicating the SCG change failure.
Step 510: Determine whether to allocate information indicating at least one specific type service dropped in the failure report in response to the SCG change failure.
Step 512: Allocating the information in the failure report, if one of the at least one second RB is used for the at least one specific type service.
Step 514: Transmit a SCG failure information message comprising the failure report to the first BS in response to the SCG change failure.
Step 516: End.

According to the process 50, the UE receives a first configuration configuring a first RB as a MCG bearer for communicating with a first BS (e.g., master eNB (MeNB)) from the first BS. The UE receives at least one second configuration configuring at least one second RB as a SCG bearer or a split bearer for communicating with the second BS (e.g., SeNB (SeNB)) from the first BS, e.g., via the first RB or another RB which is a MCG bearer. The UE detects a SCG change failure when communicating with the first BS, and generates a failure report in response to the SCG change failure. Accordingly, the UE determines whether to allocate information indicating at least one specific type service dropped in the failure report in response to the SCG change failure. If one of the at least one second RB is used for the at least one specific type service (e.g., data of the at least one specific type service is transmitted via the second RB), the UE determines to allocate the information in the failure report. If none of the at least one second RB is associated with the at least one specific type service or none of the at least one specific type service is performed by the UE, the UE does not allocate the information in the failure report. Accordingly, the UE transmits a SCG failure information message comprising the failure report to the first BS in response to the SCG change failure. Thus, the first BS can collect information of the at least one specific type service dropped due to the SCG change failure. As a result, the network can improve performance of communications with the UE according to the failure report.

Realization of the process 50 is not limited to the above description. The following examples may be applied to the process 50.

In one example, the at least one specific type service includes a voice call service, a streaming service and/or a video call service. Packet(s) of the voice call service, the streaming service or the video call service may be transmitted via an EPS bearer with a specific QCI setting (e.g., QCI 1 bearer or QCI 2 bearer). The specific QCI setting may be defined in 3GPP specifications (e.g., 3GPP TS 23.203) for each of the at least one specific type service. The network configures the EPS bearer and one of the at least one second RB associated to the EPS bearer to the UE. When the UE detects the SCG change failure, the UE stores information which indicates the at least one specific service dropped or the QCI 1 bearer dropped. The UE transmits the SCG failure information message which includes a first failure report which includes the information and indicates the SCG change failure, to the first BS. When the first BS receives the first failure report, the first BS transmits the first failure report to a network server (e.g., for operation and/or maintenance). The network server may receive a second failure report from the UE via the first BS or the second BS. The second failure report indicates the SCG change failure, and is transmitted by the UE in another SCG failure information message. The second failure report may not include information which indicates the at least one specific service dropped or the QCI 1 bearer dropped, because none of the at least one specific service is running when the UE detects the SCG change failure. For example, the UE only has an internet data service on all of the at least one second RB. The network server may receive a first plurality of failure reports (similar to the first failure report) and a second plurality of failure reports (similar to the second failure report), such the network server can generate a call drop analysis report for the UE according to the first plurality of failure reports and the second plurality of failure reports. In one example, the call drop analysis report may provide the number of drops for the at least one specific service and the number of drops for other services (i.e., not belonging to the at least one specific service). If the UE indicates each of the at least one specific service in the first failure report, the network server is able to provide the number of drops for each, some or all of the at least one specific service.

The UE may transmit a third failure report in another message (e.g., SCG failure information message or UEInformationResponse message) to a BS (e.g., the first BS, the second BS or another BS). The network server may receive the third failure report from the BS. The third failure report includes information which indicates a RLF and at least one specific service dropped due to the RLF. The network server receives a plurality of failure reports (similar to the third failure report) from the UE. Thus, the network server can generate a call drop analysis report for the UE according to the first plurality of reports and the third plurality of failure reports. In one example, the call drop analysis report provides the number of drops for the at least one specific service. In one example, the call drop analysis report provides the number of drops for each of the at least one specific service. In another example, the call drop analysis report provides the number of drops caused by the SCG change failure and the number of drops caused by the RLF.

In one example, a plurality of UEs may transmit the first failure report, the second failure report and/or the third failure report to a BS as described above. The BS transmits the first failure report, the second failure report and/or the third failure report to the network server. The network server may generate a call drop analysis report which provides the number of drops for each, some or all of the at least one specific service for the plurality of UEs, when the plurality of UEs use the same modem chip/chipset or different modem chips/chipsets from a same chip manufacturer or are manufactured by a same device manufacturer. Thus, a network operator may request the chip manufacturer or the device manufacturer to improve performance or quality of the plurality of UEs according to the other call drop analysis report.

It should be noted that a call drop analysis report described above may explicitly indicate a drop cause (e.g., SCG change failure, HOF or RLF) and the specific service for each of drops, such that the number of drops for each drop cause can be obtained. The RLF may further be divided into sub causes such as timer expiry (e.g., T310 expiry or T312 expiry), random access problem in a MCG access or a SCG access and that the maximum number of retransmissions has been reached in a MCG radio link control (RLC) layer or a SCG RLC layer. The HOF may be an intra-RAT handover (e.g., intra-LTE handover) failure or an inter-RAT handover (e.g., SRVCC handover or packet-switched (PS) handover) failure. The failure report may be a RLF-report and the drop cause may be a failure type.

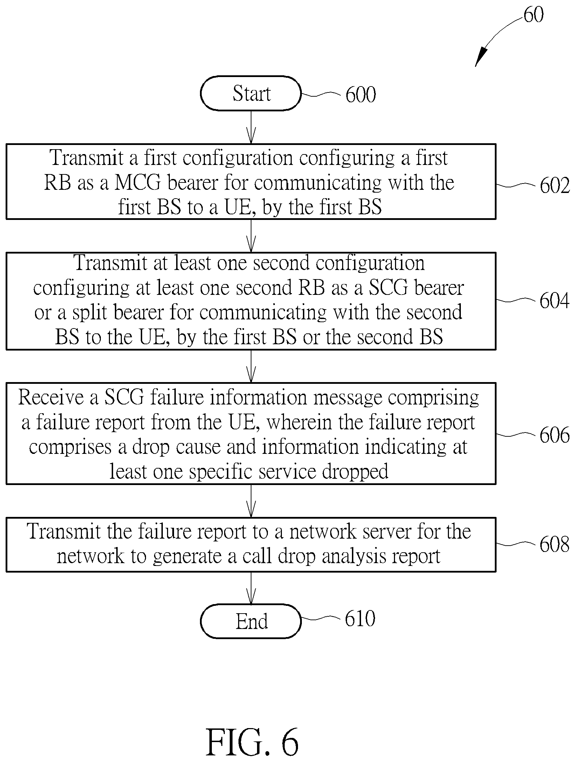

Fig. 6 is a flowchart of a process 60 according to an example of the present invention. The process 60 may be utilized in BSs, for handling a communication failure with a UE. The process 60 may be compiled into the program code 214 and includes the following steps:
Step 600: Start.
Step 602: Transmit a first configuration configuring a first RB as a MCG bearer for communicating with the first BS to a UE, by the first BS.
Step 604: Transmit at least one second configuration configuring at least one second RB as a SCG bearer or a split bearer for communicating with the second BS to the UE, by the first BS or the second BS.
Step 606: Receive a SCG failure information message comprising a failure report from the UE, wherein the failure report comprises a drop cause and information indicating at least one specific service dropped.
Step 608: Transmit the failure report to a network server for the network to generate a call drop analysis report.
Step 610: End.

According to the process 60, the first BS (e.g., MeNB) may transmit a first configuration configuring a first RB as a MCG bearer for communicating with the first BS to a UE. The first BS or the second BS (e.g., SeNB) may transmit a second configuration configuring at least one second RB as a SCG bearer or a split bearer for communicating with the second BS to the UE. After a while, the first BS may receive a SCG change failure information message comprising a failure report from the UE, wherein the failure report comprises a drop cause (e.g., SCG change failure, HOF or RLF) and information indicating at least one specific service dropped, because the UE detects a RLF or a SCG change failure when performing the at least one specific service as described previously. The examples related to the process 50 may be applied to the process 60, and are not narrated herein.

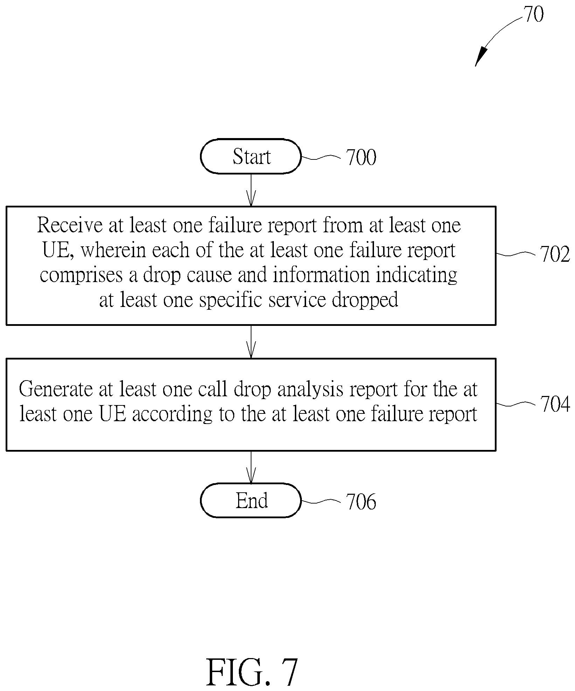

Fig. 7 is a flowchart of a process 70 according to an example of the present invention. The process 70 may be utilized in a network server, for generating at least one call drop analysis report for one or multiple UEs. The process 70 may be compiled into the program code 214 and includes the following steps:
Step 700: Start.
Step 702: Receive at least one failure report from at least one UE, wherein each of the at least one failure report comprises a drop cause and information indicating at least one specific service dropped.
Step 704: Generate at least one call drop analysis report for the at least one UE according to the at least one failure report.
Step 706: End.

According to the process 70, the network server receives at least one failure report from at least one UE, wherein each of the at least one failure report includes a drop cause and information indicating at least one specific service dropped. The network server generates at least one call drop analysis report for the at least one UE according to the at least one failure report.

Realization of the process 70 is not limited to the above description. The following examples are applied to the process 70.

In one example, each of the at least one failure report may be transmitted in a SCG failure information message or a UE Information Response message. In one example, each of the at least one failure report may include a drop cause and may or may not include information indicating the at least one specific service dropped. In one example, the at least one call drop analysis report indicates the number of the at least one specific service dropped due to a drop cause. The examples related to the process 50 may be applied to the process 70, and are not narrated herein.

Those skilled in the art should readily make combinations, modifications and/or alterations on the abovementioned description and examples. The abovementioned description, steps and/or processes including suggested steps can be realized by means that could be hardware, software, firmware (known as a combination of a hardware device and computer instructions and data that reside as read-only software on the hardware device), an electronic system, or combination thereof. An example of the means may be the communication device 20. Any of the processes above may be compiled into the program code 214.

To sum up, the present invention provides a device and a method for handling a communication failure. A network (e.g., a BS or a network server) receiving information indicating a HOF and presence of a specific bearer is able to perform correct operations in response to the HOF. In addition, the network is able to collect information associated with various types related to operation failures, to generate a call drop analysis report. Thus, the network can improve performance of communications with a UE according to the call drop analysis report.

## Claims

1. A communication device for handling a handover failure, the communication device comprising:
a storage unit (210), for storing instructions; and
a processing circuit (200), coupled to the storage unit, wherein the storage unit (210) is configured to store, and the processing circuit (200) is configured to execute, the instructions of:
transmitting at least one packet of a communication call via a first radio bearer to a first base station, BS;
receiving a handover command from the first BS, wherein the handover command hands over the first radio bearer to a second BS;
performing a handover from the first BS to the second BS;
determining that a handover failure of the handover or a radio link failure, RLF, occurs; and **characterised by** transmitting a first message to a third BS, wherein the first message comprises a first information which indicates the handover failure and presence of the first radio bearer for performing the communication call; and
transmitting a second message to a fourth BS, wherein the second message comprises second information which indicates that the RLF occurs and the presence of the first bearer.

2. The communication device of claim 1, wherein the processing circuit (200) is further configured to execute, the instructions of transmitting the first message to the third BS, when the communication device receives a first request message requesting the communication device to transmit the first message from the third BS.

3. The communication device according to claim 1 or 2, wherein the first bearer is a quality of service class identifier, QCI, 1 bearer.

4. The communication device according to anyone of the preceding claims, wherein the first BS and the second BS are long-term evolution, LTE, base stations, and the handover command is an RRCConnectionReconfiguration message.

5. The communication device according to anyone of the preceding claims, wherein the first BS is a LTE base station, the second BS is a universal mobile telecommunication system, UMTS, BS or a global system for mobile communications, GSM, BS, and the handover command is a MobilityFromEUTRACommand which indicates the communication device to perform a single radio voice call continuity, SRVCC, handover.

6. The communication device of claim 5, wherein the first information further indicates that the handover is an inter-radio access technology, RAT, handover.

7. The communication device according to anyone of the preceding claims, wherein the handover command is a single radio voice call continuity, SRVCC, command, the handover is a SRVCC handover, and the handover failure is a SRVCC handover failure.

8. A method for handling a handover failure executed by a communication device, comprising:
transmitting at least one packet of a communication call via a first radio bearer to a first base station, BS;
receiving a handover command from the first BS, wherein the handover command hands over the first radio bearer to a second BS;
performing a handover from the first BS to the second BS;
determining that a handover failure of the handover or a radio link failure, RLF, occurs; and **characterised by** transmitting a first message to a third BS, wherein the first message comprises a first information which indicates the handover failure and presence of the first radio bearer for performing the communication call; and
transmitting a second message to a fourth BS, wherein the second message comprises second information which indicates that the RLF occurs and the presence of the first bearer.

9. The method of claim 8, wherein the step of transmitting the first message to the third BS, wherein the first message comprises a first information which indicates the handover failure and presence of the first radio bearer for performing the communication call, further comprises:
when the communication device receives a first request message requesting the communication device to transmit the first message from the third BS.

10. The method according to claim 8 or 9, wherein the first bearer is a quality of service class identifier, QCI, 1 bearer.

11. The method according to anyone of the preceding claims 8 to 10, wherein the first BS and the second BS are long-term evolution, LTE, base stations, and the handover command is an RRCConnectionReconfiguration message.

12. The method according to anyone of the preceding claims 8 to 11, wherein the first BS is a LTE base station, the second BS is a universal mobile telecommunication system, UMTS, BS or a global system for mobile communications, GSM, BS, and the handover command is a MobilityFromEUTRACommand which indicates the communication device to perform a single radio voice call continuity, SRVCC, handover.

13. The method of claim 12, wherein the first information further indicates that the handover is an inter-radio access technology, RAT, handover.

14. The method according to anyone of the preceding claims 8 to 13, wherein the handover command is a single radio voice call continuity, SRVCC, command, the handover is a SRVCC handover, and the handover failure is a SRVCC handover failure.

## Patentansprüche

1. Eine Kommunikationsvorrichtung zur Handhabung eines Handoverfehlers, wobei die Kommunikationsvorrichtung Folgendes beinhaltet:
eine Speichereinheit (210) zum Speichern von Anweisungen; und
eine mit der Speichereinheit gekoppelte Verarbeitungsschaltung (200), wobei die Speichereinheit (210) dazu konfiguriert ist, die folgenden Anweisungen zu speichern, und wobei die Verarbeitungsschaltung (200) dazu konfiguriert ist, die folgenden Anweisungen auszuführen:
Übertragen mindestens eines Pakets eines Kommunikationsanrufs über einen ersten Funkträger (Radio Bearer) an eine erste Basisstation, BS;
Empfangen eines Handoverbefehls von der ersten BS, wobei der Handoverbefehl den ersten Funkträger an eine zweite BS weiterreicht;
Durchführen eines Handovers von der ersten BS an die zweite BS;
Bestimmen, dass ein Handoverfehler des Handovers oder ein Funkverbindungsfehler, RLF (Radio Link Failure), auftritt; und
**gekennzeichnet durch**
Übertragen einer ersten Nachricht an eine dritte BS, wobei die erste Nachricht eine erste Information beinhaltet, die den Handoverfehler und das Vorhandensein des ersten Funkträgers zum Durchführen des Kommunikationsanrufs anzeigt; und
Übertragen einer zweiten Nachricht an eine vierte BS, wobei die zweite Nachricht eine zweite Information beinhaltet, die anzeigt, dass der RLF auftritt, und die das Vorhandensein des ersten Trägers anzeigt.

2. Kommunikationsvorrichtung gemäß Anspruch 1, wobei die Verarbeitungsschaltung (200) ferner dazu konfiguriert ist, die Anweisungen zum Übertragen der ersten Nachricht an die dritte BS auszuführen, wenn die Kommunikationsvorrichtung von der dritten BS eine erste Anforderungsnachricht empfängt, die die Kommunikationsvorrichtung auffordert, die erste Nachricht zu übertragen.

3. Kommunikationsvorrichtung gemäß Anspruch 1 oder 2, wobei der erste Träger ein Dienstgüteklassenkennung-1-Träger, QCI-1-Träger (Quality of Service Class Identifier 1 Bearer), ist.

4. Kommunikationsvorrichtung gemäß einem der vorhergehenden Ansprüche, wobei die erste BS und die zweite BS Long-Term-Evolution-Basisstationen, LTE-Basisstationen, sind und der Handoverbefehl eine RRCConnectionReconfiguration-Nachricht ist.

5. Kommunikationsvorrichtung gemäß einem der vorhergehenden Ansprüche, wobei die erste BS eine LTE-Basisstation ist, die zweite BS eine BS des Universal Mobile Telecommunication System, UTMS, oder eine BS des Global System for Mobile Communications, GSM, ist, und der Handoverbefehl ein MobilityFromEUTRACommand ist, der der Kommunikationsvorrichtung anzeigt, einen Handover nach Single Radio Voice Call Continuity, SRVCC, durchzuführen.

6. Kommunikationsvorrichtung gemäß Anspruch 5, wobei die erste Information ferner anzeigt, dass der Handover ein Inter-Funkzugangstechnologie-Handover, Inter-RAT-Handover (Inter-Radio Access Technology Handover), ist.

7. Kommunikationsvorrichtung gemäß einem der vorhergehenden Ansprüche, wobei der Handoverbefehl ein Befehl nach Single Radio Voice Call Continuity, SRVCC, ist, der Handover ein SRVCC-Handover ist und der Handoverfehler ein SRVCC-Handoverfehler ist.

8. Ein Verfahren zur Handhabung eines Handoverfehlers, ausgeführt von einer Kommunikationsvorrichtung, das Folgendes beinhaltet:
Übertragen mindestens eines Pakets eines Kommunikationsanrufs über einen ersten Funkträger an eine erste Basisstation, BS;
Empfangen eines Handoverbefehls von der ersten BS, wobei der Handoverbefehl den ersten Funkträger an eine zweite BS weiterreicht;
Durchführen eines Handovers von der ersten BS an die zweite BS;
Bestimmen, dass ein Handoverfehler des Handovers oder ein Funkverbindungsfehler, RLF, auftritt; und
**gekennzeichnet durch**
Übertragen einer ersten Nachricht an eine dritte BS, wobei die erste Nachricht eine erste Information beinhaltet, die den Handoverfehler und das Vorhandensein des ersten Funkträgers zum Durchführen des Kommunikationsanrufs anzeigt; und
Übertragen einer zweiten Nachricht an eine vierte BS, wobei die zweite Nachricht eine zweite Information beinhaltet, die anzeigt, dass der RLF auftritt, und die das Vorhandensein des ersten Trägers anzeigt.

9. Verfahren gemäß Anspruch 8, wobei der Schritt des Übertragens der ersten Nachricht an die dritte BS, wobei die erste Nachricht eine erste Information beinhaltet, die den Handoverfehler und das Vorhandensein des ersten Funkträgers zum Durchführen des Kommunikationsanrufs anzeigt, ferner Folgendes beinhaltet:
wenn die Kommunikationsvorrichtung von der dritten BS eine erste Anforderungsnachricht empfängt, die die Kommunikationsvorrichtung auffordert, die erste Nachricht zu übertragen.

10. Verfahren gemäß Anspruch 8 oder 9, wobei der erste Träger ein Dienstgüteklassenkennung-1-Träger, QCI-1-Träger, ist.

11. Verfahren gemäß einem der vorhergehenden Ansprüche 8 bis 10, wobei die erste BS und die zweite BS Long-Term-Evolution-Basisstationen, LTE-Basisstationen, sind und der Handoverbefehl eine RRCConnectionReconfiguration-Nachricht ist.

12. Verfahren gemäß einem der vorhergehenden Ansprüche 8 bis 11, wobei die erste BS eine LTE-Basisstation ist, die zweite BS eine BS des Universal Mobile Telecommunication System, UTMS, oder eine BS des Global System for Mobile Communications, GSM, ist, und der Handoverbefehl ein MobilityFromEUTRACommand ist, der der Kommunikationsvorrichtung anzeigt, einen Handover nach Single Radio Voice Call Continuity, SRVCC, durchzuführen.

13. Verfahren gemäß Anspruch 12, wobei die erste Information ferner anzeigt, dass der Handover ein Inter-Funkzugangstechnologie-Handover, Inter-RAT-Handover, ist.

14. Verfahren gemäß einem der vorhergehenden Ansprüche 8 bis 13, wobei der Handoverbefehl ein Befehl nach Single Radio Voice Call Continuity, SRVCC, ist, der Handover ein SRVCC-Handover ist und der Handoverfehler ein SRVCC-Handoverfehler ist.

## Revendications

1. Un dispositif de communication pour la gestion d'un échec de transfert (*handover*), le dispositif de communication comprenant :
une unité de stockage (210), pour le stockage d'instructions ; et
un circuit de de traitement (200), couplé à l'unité de stockage, où l'unité de stockage (210) est configurée afin de stocker, et le circuit de traitement (200) est configuré afin d'exécuter, les instructions :
de transmission d'au moins un paquet d'un appel de communication via un premier support radio (*radio bearer*) à une première station de base, BS (*Base Station*) ;
de réception d'une commande de transfert en provenance de la première BS, où la commande de transfert transfère le premier support radio à une deuxième BS ;
de réalisation d'un transfert de la première BS à la deuxième BS ;
de détermination qu'un échec de transfert du transfert ou qu'un échec de liaison radio, RLF (*Radio Link Failure*), se produit ; et
**caractérisé par**
la transmission d'un premier message à une troisième BS, où le premier message comprend une première information qui indique l'échec de transfert et la présence du premier support radio pour la réalisation de l'appel de communication ; et
la transmission d'un deuxième message à une quatrième BS, où le deuxième message comprend une deuxième information qui indique que le RLF se produit et la présence du premier support.

2. Le dispositif de communication de la revendication 1, où le circuit de traitement (200) est en sus configuré afin d'exécuter les instructions de transmission du premier message à la troisième BS, lorsque le dispositif de communication reçoit un premier message de demande demandant au dispositif de communication de transmettre le premier message en provenance de la troisième BS.

3. Le dispositif de communication selon la revendication 1 ou la revendication 2, où le premier support est un support de QCI (*Quality of service Class Identifier,* identificateur de classe de qualité de service) 1.

4. Le dispositif de communication selon n'importe laquelle des revendications précédentes, où la première BS et la deuxième BS sont des stations de base LTE (*Long-Term Evolution,* évolution à long terme), et la commande de transfert est un message RRCConnectionReconfiguration.

5. Le dispositif de communication selon n'importe laquelle des revendications précédentes, où la première BS est une station de base LTE, la deuxième BS est une BS UMTS (*Universal Mobile Telecommunication System,* système universel de télécommunication avec les mobiles) ou une BS GSM (*Global System for Mobile communications,* système mondial de communications avec les mobiles), et la commande de transfert est une commande MobilityFromEUTRACommand qui indique au dispositif de communication de réaliser un transfert SRVCC (*Single Radio Voice Call Continuity,* continuité d'appel vocal radio unique).

6. Le dispositif de communication de la revendication 5, où la première information indique en sus que le transfert est un transfert inter-RAT (*Radio Access Technology,* technologie d'accès radio).

7. Le dispositif de communication selon n'importe laquelle des revendications précédentes, où la commande de transfert est une commande SRVCC (*Single Radio Voice Call Continuity*), le transfert est un transfert SRVCC, et l'échec de transfert est un échec de transfert SRVCC.

8. Un procédé pour la gestion d'un échec de transfert exécuté par un dispositif de communication, comprenant :
la transmission d'au moins un paquet d'un appel de communication via un premier support radio à une première station de base, BS ;
la réception d'une commande de transfert en provenance de la première BS, où la commande de transfert transfère le premier support radio à une deuxième BS ;
la réalisation d'un transfert de la première BS à la deuxième BS ;
la détermination qu'un échec de transfert du transfert ou qu'un échec de liaison radio, RLF, se produit ; et
**caractérisé par**
la transmission d'un premier message à une troisième BS, où le premier message comprend une première information qui indique l'échec de transfert et la présence du premier support radio pour la réalisation de l'appel de communication ; et
la transmission d'un deuxième message à une quatrième BS, où le deuxième message comprend une deuxième information qui indique que le RLF se produit et la présence du premier support.

9. Le procédé de la revendication 8, où l'étape de transmission du premier message à la troisième BS, où le premier message comprend une première information qui indique l'échec de transfert et la présence du premier support radio pour la réalisation de l'appel de communication, comprend en sus :
lorsque le dispositif de communication reçoit un premier message de demande demandant au dispositif de communication de transmettre le premier message en provenance de la troisième BS.

10. Le procédé selon la revendication 8 ou la revendication 9, où le premier support est un support de QCI (*Quality of service Class Identifier*) 1.

11. Le procédé selon n'importe laquelle des revendications précédentes 8 à 10, où la première BS et la deuxième BS sont des stations de base LTE (*Long-Term Evolution*), et la commande de transfert est un message RRCConnectionReconfiguration.

12. Le procédé selon n'importe laquelle des revendications précédentes 8 à 11, où la première BS est une station de base LTE, la deuxième BS est une BS UMTS (*Universal Mobile Telecommunication System*) ou une BS GSM (*Global System for Mobile communications*), et la commande de transfert est une commande MobilityFromEUTRACommand qui indique au dispositif de communication de réaliser un transfert SRVCC (*Single Radio Voice Call Continuity*).

13. Le procédé de la revendication 12, où la première information indique en sus que le transfert est un transfert inter-RAT (*Radio Access Technology*).

14. Le procédé selon n'importe laquelle des revendications précédentes 8 à 13, où la commande de transfert est une commande SRVCC (*Single Radio Voice Call Continuity*), le transfert est un transfert SRVCC, et l'échec de transfert est un échec de transfert SRVCC.
